(19) Europäisches Patentamt
European Patent Office
Office européen des brevets

(11) Publication number: **0 033 515**
**B1**

# (12) EUROPEAN PATENT SPECIFICATION

(45) Date of publication of patent specification: **11.04.84**

(51) Int. Cl.[3]: **C 08 G 59/18**, C 08 G 59/32, C 09 D 3/00, C 08 L 63/00, C 08 F 220/32, C 08 G 59/40

(21) Application number: **81100625.3**

(22) Date of filing: **28.01.81**

## (54) Hydrocurable compositions containing epoxy and oxazolidine or oxazine groups, their use as or in coating and impregnating compositions and polymer containing such groups.

(30) Priority: **30.01.80 US 116693**

(43) Date of publication of application:
**12.08.81 Bulletin 81/32**

(45) Publication of the grant of the patent:
**11.04.84 Bulletin 84/15**

(84) Designated Contracting States:
**BE DE FR GB IT NL SE**

(56) References cited:
FR - A - 2 303 832
US - A - 3 037 006
US - A - 3 630 996
US - A - 3 773 550
US - A - 3 822 237

(73) Proprietor: **Rohm and Haas Company**
**Independence Mall West**
**Philadelphia, Pennsylvania 19105 (US)**

(72) Inventor: **Emmons, William David**
**1411 Holcomb Road**
**Huntingdon Valley, Pa. 19006 (US)**
Inventor: **Feely, Wayne Edmund**
**1172, Lindsay Lane**
**Rydal, Pa. 19046 (US)**

(74) Representative: **Patentanwälte Müller-Boré, Deufel, Schön, Hertel, Lewald, Otto**
**Postfach 26 02 47 Isartorplatz 6**
**D-8000 München 26 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 033 515 B1

Hydrocurable compositions containing epoxy and oxazolidine or oxazine groups, their use as or in coating and impregnating compositions and polymer containing such groups

This invention is concerned with hydrocurable compositions containing epoxide and certain oxazolidine or oxazine functionality, use of the compositions for coating, impregnating or adhesive purposes and polymer containing these functionalities. The invention also embraces methods of coating and/or impregnating substrates with the compositions.

Polyepoxides, such as, for example, those obtained by reacting epichlorohydrin with polyhydric phenols in the presence of caustic, are promising materials for use in many industrial applications as they can be reacted with curing agents to form insoluble, infusible products having good chemical resistance. The conventional polyepoxide-curing agent systems, however, have a drawback that greatly limits the industrial use of the polyepoxides. The known mixtures comprising the polyepoxide and curing agent set up rather rapidly, and this is true even though the mixtures are stored in air-tight containers away from moisture and air and even though the temperature is maintained quite low. This difficulty necessitates a mixing of the components just before use and a rapid use of the material before cure sets in. Such a procedure places a considerable burden on the individual operators, and in many cases, gives inferior products resulting from inefficient mixing and too rapid operations.

Numerous attempts have been made to provide a latent curing agent for polyepoxides, by which is meant the type of resin-forming organic compound containing a plurality of vic-epoxy groups of the formula

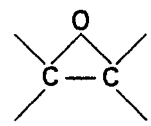

Such compounds may be saturated or unsaturated, aliphatic, cycloaliphatic, aromatic, or heterocyclic and may be substituted, if desired, with substituents such as chlorine atoms, hydroxyl groups, ether radicals, and the like.

U.S. Patents 3,291,775 and 3,547,880 disclose the use of certain polyimines obtainable by reacting a ketone or aldehyde with a polyamine to cure or resinify a polyepoxide.

U.S. Patent 3,037,006, discloses copolymers of 5 to 25% by weight of an N-(acryloxyalkyl)-oxazolidine or an N-(acryloxyalkyl)-tetrahydro-1,3-oxazine embraced by the formula

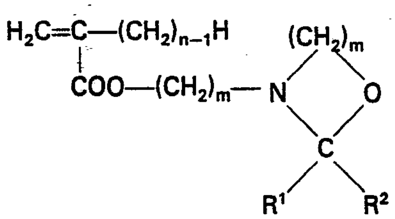

where
n is 1 or 2,
m is 2 or 3,
$R^1$, when not directly joined to $R^2$, is selected from the group consisting of hydrogen, phenyl, benzyl, and $C_1$—$C_{12}$ alkyl groups,
$R^2$, when not directly joined to $R^1$, is selected from the group consisting of hydrogen and $C_1$—$C_4$ alkyl groups and
$R^1$ and $R^2$, when directly joined together, form a 5- or 6-carbon ring with the attached carbon atom of the ring in the formula, i.e., $R^1$ and $R^2$, when joined together, are selected from the group consisting of pentamethylene and tetramethylene.

In the patent, the copolymers can be mixed with polyepoxides for the production of insoluble and infusible crosslinked coatings. No specific examples of such compositions are given. There is no suggestion in this patent that the copolymers in which $R^1$ and $R^2$ are independent saturated hydrocarbon groups or together an alkylene group forming a 5- to 6-carbon ring with the attached carbon of the ring in the formula would provide distinctive and unexpected storage-stability properties that are lacking in those copolymers in which either or both $R^1$ and $R^2$ is, or are, hydrogen atoms.

We have now found that oxazolidines and oxazines in which the two available valencies of the 2-position carbon atom are substituted by alkyl groups or are joined together through an alkylene group to form a ring are surprisingly stable in the presence of polyepoxides under anhydrous conditions. In similar compositions in which the oxazolidine or oxazine is mono or unsubstituted in the 2-position (i.e. the 2-carbon atom carries one or two hydrogen atoms) the oxa-compound and polyepoxide react quite rapidly. Since di-alkyl or ring substitution in the 2-position increases basicity and t-amines are known to catalyse the reaction of the epoxy group it would be expected that the substituted compound would react even faster. In fact the opposite has been found to be the case and surprisingly stable mixtures can be prepared according to the invention.

This invention provides a new class of latent curing agents for polyepoxides, agents that are substantially unreactive with polyepoxides when stored under atmospheres substantially free of moisture. The curing agents can be premixed with the polyepoxides and the mixture stored or shipped without danger of premature gelation, the compositions undergoing cure only when in contact with moisture. The invention also provides a new process for curing polyepoxides that is particularly useful for the preparation of surface coatings. The compositions of the invention may be cured to prepare high solids or solvent-free coatings.

According to the invention there is provided an anhydrous, hydrocurable composition comprising (a) at least two oxazolidinyl or oxazinyl groups of the formula:

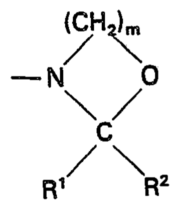

wherein m is 2 or 3, preferably 2, and (b) at least two epoxy groups, the composition being anhydrous, characterized in that in the above formula $R^1$ and $R^2$ are alkyl groups or are joined together to form an alkylene group containing 4 or 5 carbon atoms, the oxazolidine or oxazine component should be free of other amine or amine generating groups, the composition being stable for at least one month, preferably for months such as at least 2 or 3 months.

(a) and (b) may be separately in at least two different components of the material and/or together in at least one component in the material.

By stable is meant that the composition is still useful as or in a coating composition after the indicated time, i.e. the composition has not become gelatinous—when its viscosity has not increased to a point where it cannot be reduced with solvent to give a useful coating.

The compositions of the invention should not contain other groups sufficiently reactive with the epoxy, oxazolidine or oxazine groups under anhydrous conditions so as to destroy the compositions' stability. Thus the oxazolidine or oxazine component should be free of other amine or amine generating groups.

The epoxy groups are generally provided by a resin-forming polyepoxide containing at least two vic-epoxy groups. The oxa-groups are generally provided by a polyfunctional compound or vinyl addition or condensation polymer containing a plurality of pendant oxa-groups. In one embodiment of the invention both epoxy and oxa-groups are together in a vinyl addition copolymer.

According to the invention the polyepoxide may be mixed with a polyfunctional compound or a vinyl addition or condensation polymer containing a plurality of pendant (and/or terminal) cyclic oxazolidinyl groups of Formula (I) in the absence of water and, optionally, formulated with conventional non-aqueous ingredients, such as pigments, fillers, dispersing agents, and rheological agents. The resultant compositions may be used to form coatings and may be packaged in closed containers in the absence of moisture and stored therein for extensive periods of time without reaction between the epoxy and Formula (I) groups. However, when the composition is subsequently spread out and exposed to moist atmosphere, the composition sets up or cures even at ambient temperature (of 15 to 25°C) to form a hard, infusible film.

The oxazolidinyl or oxazinyl compound may be obtained in any of several ways. An N-hydroxyalkyl-2,2-dialkyl- or 2,2-alkylene compound having a cyclic group of Formula I may first be prepared by reacting diethanolamine or dipropanolamine with a dialkylketone, or a cyclopentanone or cyclohexanone. The resulting cyclic oxazolidinyl compound preferably has the formula:

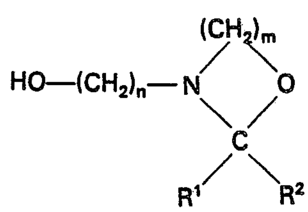

(II)

wherein $R^1$, $R^2$ and m are as defined in Formula I and n is 2 or 3, can then be converted into a poly(ester) by using it to transesterify a polyester of a polycarboxylic acid, such as dimethyladipate or dimethylsuccinate. The resulting oxazolidinyl or oxazinyl compound is effective as a curing agent for a polyepoxide when mixed therewith and then applied in a coating, impregnating, or binding composition and exposed to moisture. There should be no other amine nitrogen groups in the polyfunctional compound containing the cyclic oxa-groups.

Similarly the N-hydroxyalkyl cyclic oxazolidinyl compound may be reacted with a polyisocyanate, such as a diisocyanate or triisocyanate or with at least one polycarboxylic acid.

The resulting products may be mixed with the polyepoxide in the absence of moisture, in which condition they remain effectively stable for months but upon spreading out the composition in the form of a film and exposing the latter to water or atmospheric moisture, the composition is cured or crosslinked to an infusible and insoluble condition.

The vinyl addition polymers containing the pendant groups of formula I are preferably copolymers containing units of the 2,2-dialkyl- or 2,2-alkylene-monomers of formula I above with at least one other monoethylenically unsaturated copolymerizable monomer of non-ionic nature having a group of the formula

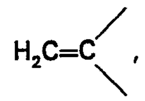

such as styrene, vinyl toluene, acrylonitrile, and $C_1$ to $C_{18}$ alkyl esters of acrylic acid or methacrylic acid, e.g., methyl, ethyl, butyl, cyclohexyl, and 2-ethylhexyl (meth)acrylate. The copolymer may contain as little as 5% by weight of the monomer of formula I up to as much as 70% by weight thereof, but preferably from about 20% to about 35% by weight thereof. It is essential, however, that all of the monomer of Formula I present in the copolymer consist of the 2,2-dialkyl or 2,2-alkylene substituted groups defined by formula I above. Of these monomers, the preferred ones are the 2,2-dialkyl-oxazolidinylethyl(meth)acrylate.

The oxa-monomers generally have the formula:

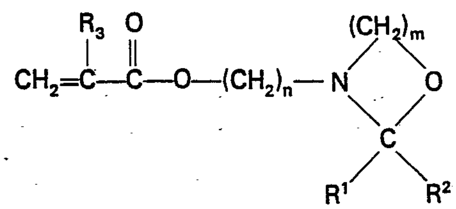

(III)

wherein $R^1$, $R^2$, m and n are as defined above and $R^3$ is H or $CH_3$.

The copolymers may be prepared by solution (organic solvent) polymerization as hereinafter described in Example 1A).

Preferably the copolymers contain at least 5% by weight of monomer (ii).

The polyepoxides and poly(functional) compounds or vinyl addition copolymers having pendant formula I groups may be mixed in a wide range of proportions. In general, however, the amount of poly(functional) compound or copolymer used should provide approximately one equivalent of amine (developed in contact with water or moisture in the ambient air) for each equivalent of epoxy group. It is preferred that at least one equivalent of epoxy group be used for each equivalent of potential amine in the oxa-groups. Depending on the particular composition or use, the ratio of amine/epoxy equivalency may vary from about 4:1 to about 1:4 or possibly even over a wider range in some instances. As used herein, the equivalent amount of poly(functional) compound or copolymer is that amount needed to furnish one amino hydrogen upon hydrolytic opening of the formula I ring to produce a group of the formula $-N(H)-(CH_2)_m-OH$ (herein designated formula IB) with liberation of a ketone $R^1R^2C=O$.

In preparing the mixtures of the present invention, it is sometimes desirable to have the polyepoxide in a mobile liquid condition when the oxa-compound or polymer is added so as to facilitate thorough mixing. The polyepoxides as described below are generally viscous to solid materials at ordinary temperature. With those that are liquid, but too viscous for readily mixing, they are either heated to reduce the viscosity or have a liquid solvent added thereto in order to provide fluidity. Normally, solids are likewise either melted or mixed with a liquid solvent. Various solvents are suitable for achieving fluidity of the polyepoxides. These may be volatile solvents which escape from the mixed compositions by evaporation before or during the curing such as ketones like acetone, methyl ethyl ketone, methyl *n*-propyl ketone, methyl isobutyl ketone, isophorone, etc., esters such as ethyl acetate, butyl acetate. Cellosolve® acetate (ethylene glycol monoacetate), methyl Cellosolve acetate (acetate of ethylene glycol mono-methylether); ether alcohols such as methyl, ethyl or butyl ether of ethylene glycol or diethylene glycol; chlorinated hydrocarbons such as trichloropropane or chloroform. To save expense, these active solvents may be used in admixture with aromatic hydrocarbons such as benzene, toluene, xylene, and/or alcohols such as ethyl, isopropyl or *n*-butyl alcohol. Solvents which remain in the cured compositions may also be used, such as diethylphthalate, or liquid monoepoxy compounds including glycidyl allyl ether, glycidylphenyl ether and styrene oxide as well as cyano-substituted hydrocarbons, such as acetonitrile. It is also convenient to employ a glycidyl polyether of the dihydric phenol in admixture with a normally liquid glycidyl polyether of a polyhydric alcohol.

The polyepoxides to be used in the compositions of the invention include those organic compounds containing a plurality of epoxy groups, i.e., groups of the formula

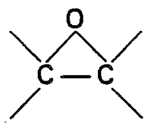

These compounds may be saturated or unsaturated, aliphatic, cycloaliphatic, aromatic or heterocyclic and may be substituted if desired with substituents, such as chlorine atoms, hydroxyl groups or ether radicals. They may also be monomeric or polymeric.

For clarity, many of the polyepoxides and particularly those of the polymeric type have been defined in terms of epoxy equivalent value. The meaning of this expression is described in U.S. Patent No. 2,633,458.

If the polyepoxide material consists of a single compound and all of the epoxy groups are intact, the epoxy equivalency will be integers, such as 2, 3 or 4. However, in the case of the polymeric type of polyepoxides many of the materials may contain some of the monomeric monoepoxides and/or contain macromolecules of somewhat different molecular weight so the epoxy equivalent value may be quite low and contain fractional values. The polymeric material may, for example, have epoxy equivalent values, such as 1.5, 1.8 or 2.5.

Various examples of polyepoxides that may be used in the process of the invention are given in U.S. 2,633,458.

Examples of such polyepoxides include the monomeric-type polyepoxide compounds which may be exemplified by the following: vinyl cyclohexene dioxide, epoxidized soyabean oil, butadiene dioxide, 1,4-bis (2,3-epoxypropoxy)benzene, 1,3-bis(2,3-epoxypropoxy)benzene, 4,4′-bis(2,3-epoxypropoxy)diphenyl ether, 1,8-bis(2,3-epoxypropoxy)octane, 1,4-bis(2,3-epoxypropoxy)cyclohexane, 4,4′-bis(2-hydroxy-3,4-epoxybutoxy)diphenyldimethylmethane, 1,3-bis(4,5-epoxypentoxy)-5-chlorobenzene, 1,4-bis(3,4-epoxybutoxy)-2-chlorocyclohexane, diglycidyl ether, 1-3-bis(2-hydroxy-3,4-epoxybutoxy)benzene, 1,4-bis(2-hydroxy-4,5-epoxypentoxy)benzene, 1,2,5,6-di-epoxy-3-hexyne, 1,2,5,6-diepoxyhexane, and 1,2,3,4-tetra(2-hydroxy-3,4-epoxybutoxy)butane.

Other examples of this type include the glycidyl polyethers of the polyhydric phenols obtained by reacting a polyhydric phenol with a great excess, e.g., 4 to 8 mol excess, of a halogen-containing epoxide in an alkaline medium, for example, 2,2-bis(2,3-epoxypropoxyphenyl)propane (obtained by reacting bis-phenol 2,2-bis(4-hydroxyphenyl)propane with an excess of epichlorohydrin). Other polyhydric phenols that can be used for this purpose include resorcinol, catechol, hydroquinone, methyl resorcinol, or polynuclear phenols, such as 2,2-bis(4-hydroxyphenyl)butane, 4,4′-dihydroxybenzophenone, bis(4-hydroxyphenyl)ethane, and 1,5-dihydroxynaphthalene. The halogen-containing epoxides may be further exemplified by 3-chloro-1,2-epoxybutane, 3-bromo-1,3-epoxyhexane, 3-chloro-1,2-epoxyoctane.

Examples of the polymeric-type polyepoxides include the polyepoxypolyhydroxy polyethers obtained by reacting, preferably in an alkaline or an acid medium, a polyhydric alcohol or polyhydric phenol with a polyepoxide, such as the reaction product of glycerol and bis(2,3-epoxypropyl)-ether, the reaction product of sorbitol and bis-(2,3-epoxy-2-methylpropyl)ether, the reaction product of pentaerythritol and 1,2-epoxy-4,5-epoxypentane, and the reaction product of bis-phenol and bis(2,3-epoxy-2-methylpropyl)ether, the reaction product of resorcinol and bis(2,3-epoxypropyl)ether, and the reaction product of catechol and bis(2,3-epoxypropyl)ether.

A further group of the polymeric polyepoxides comprises the hydroxy-substituted polyepoxy polyethers obtained by reacting, preferably in an alkaline medium, a slight excess, e.g. 5 to 3 mol excess of a halogen-containing epoxide as described above, with any of the aforedescribed polyhydric phenols such as resorcinol, catechol, bis-phenol and bis(2,2′-dihydroxy-dinaphthyl)methane.

Also included within this group are the polyepoxy polyethers obtained by reacting, preferably in the presence of an acid-acting compound, such as hydrofluoric acid, one of the aforedescribed halogen-containing epoxides with a polyhydric alcohol, such as glycerol, propylene glycol, ethylene glycol, trimethylene glycol and butylene glycol and subsequently treating the resulting product with an alkaline component.

Other polymeric polyepoxide compounds include the polymers and copolymers of the epoxy-containing monomers possessing at least one polymerizable ethylenic linkage. When this type of monomer is polymerized in the substantial absence of alkaline or acidic catalysts, such as in the presence of heat, oxygen, peroxy compound or actinic light they undergo addition polymerization at the multiple bond leaving the epoxy group unaffected. These monomers may be polymerized with themselves or with other ethylenically unsaturated monomers, such as styrene, vinyl acetate, methacrylonitrile, acrylonitrile, vinyl chloride, vinylidene chloride, methylacrylate, methyl methacrylate, diallyl phthalate, vinyl allyl phthalate, divinyl adipate, chloroallyl acetate, and vinyl methallyl pimelate. Illustrative examples of these polymers include poly(allyl 2,3-epoxypropyl ether), poly(2,3-epoxypropyl crotonate), allyl 2,3-epoxypropyl ether-styrene copolymer, methallyl 3,4-epoxybutyl ether-allyl

benzoate copolymer, poly(vinyl 2,3-epoxypropyl ether), allyl glycidyl ether-vinyl acetate copolymer and poly(4-glycidyloxystyrene).

A preferred group of epoxy-containing organic materials are the members of the group consisting of the organic compounds possessing a plurality of epoxyalkoxy radicals, e.g. 2 to 4, joined to an organic radical which .contains from one to two aromatic rings, organic compounds possessing a plurality of epoxyhydroxyalkoxy radicals, e.g. 2 to 4, joined to an organic radical containing from one to two aromatic rings, the polyepoxy-containing polymeric reaction product of an aromatic polyhydric phenol and epihalohydrin, the polyepoxy-containing polymeric reaction product of an aliphatic polyhydric alcohol and epichlorohydrin, the polyepoxy-containing polymeric reaction product of a polyhydric phenol and a polyepoxide compound, the polyepoxy-containing polymeric reaction product of an aliphatic polyhydric alcohol and a polyepoxide compound, the polymers of the epoxy-containing monomers possessing at least one polymerizable ethylenic linkage prepared in the absence of alkaline or acidic catalysts, and copolymers of the foregoing epoxy-containing monomers and a monomer containing at least one $CH_2{=}C{=}$ group prepared in the absence of alkaline or acidic catalysts. The expression "epoxy-alkoxy" radical refers to an alkoxy radical substituted with an epoxy group. The expression "epoxyhydroxyalkoxy radical" refers to an alkoxy radical substituted with a hydroxyl and epoxy group.

The monomeric type glycidyl polyethers of dihydric phenols obtained by reacting epichlorohydrin with a dihydric phenol in an alkaline medium may be represented by the general formula

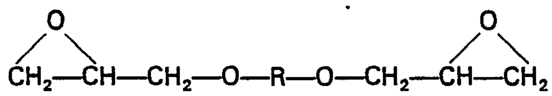

wherein R represents a divalent hydrocarbon radical of the dihydric phenol. The polymeric products will generally not be a single simple molecule but will be a complex mixture of glycidyl polyethers of the general formula

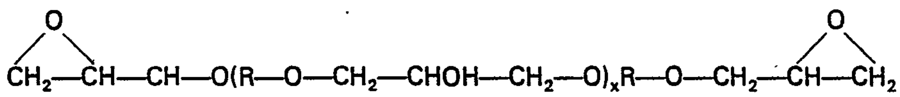

wherein R is a divalent hydrocarbon radical of the dihydric phenol and x is an integer of the series 0, 1, 2, 3 etc. While for any single molecule of the polyether x is an integer, the fact that the obtained polyether is a mixture of compounds causes the determined value for x to be an average which is not necessarily zero or a whole number. The polyethers may in some cases contain a very small amount of material with one or both of the terminal glycidyl radicals in hydrated form.

The aforedescribed preferred glycidyl polyethers of the dihydric phenols may be prepared by reacting the required proportions of the dihydric phenol and the epichlorohydrin in an alkaline medium. The desired alkalinity is obtained by adding basic substances, such as sodium or potassium hydroxide, preferably in stoichiometric excess to the epichlorohydrin. The reaction is preferably accomplished at temperatures within the range of from 50°C to 150°C. The heating is continued for several hours to effect the reaction and the product is then washed free of salt and base.

A group of polyepoxides which are not specifically illustrated in the above patent but are of particular value are those which contain terminal epoxy groups of the formula

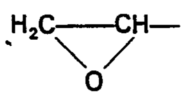

and include glycidyl polyethers of polyhydric phenols or polyhydric alcohols. These preferred resin-forming polyepoxides may be termed "ethoxyline" resins and are more particularly defined as organic compounds free of functional groups other than hydroxyl and epoxy groups which contain at least 2 vic-epoxy groups in which the oxygen is attached to adjacent singly-bonded carbon atoms and which have a molecular weight in the range of about 250 to 5,000. The polyepoxides having epoxy equivalencies from 100 to 1,025 have generally been found useful. Those having greater epoxy equivalencies up to about 1500 or higher may be used when special care is taken to select the comonomer(s) of the formula I copolymer as well as the proportion(s) thereof relative to polyepoxide, to provide mutual compatibility.

Polyepoxides that may be used include the "ethoxylene resins" available under the tradenames of D.E.R., D.H.R., Epon, Eponex, or Araldite resins. They include polyether derivatives of polyhydric phenol containing epoxy groups and may be prepared by effecting reaction between epichlorohydrin and a polyhydroxy phenol or alcohol, such as Bis-Phenol A, or the completely hydrogenated product of Bis-Phenol A.

There may also be used as the polyepoxide component addition copolymers of glycidyl acrylate,

glycidyl methacrylate, glycidyl vinyl ether, or glycidyl vinyl sulfide with other monoethylenically unsaturated comonomers containing a group of the formula

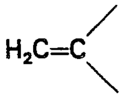

such as a $C_1$—$C_{18}$ alkyl ester of acrylic acid or methacrylic acid, styrene, vinyl acetate, acrylonitrile, and vinylchloride. The copolymers may contain up to 40% by weight of one or more of the glycidyl esters or ethers, and preferably contain about 10% to 30% by weight thereof.

The vinyl copolymerization system just mentioned may be used to incorporate both functionalities in the same polymer. By including in the comonomers a 2,2-dialkyl-oxazolidinylalkyl (meth)-acrylate or a 2,2-alkylene analogue, preferably of formula (III) above, a copolymer of an unsaturated glycidyl-containing monomer with the formula I containing unsaturated oxazolidinyl monomers defined hereinabove may be produced under anhydrous conditions so that upon spreading the copolymer as a coating or adhesive and subjecting the latter to moisture, the pendant oxazolidinyl cyclic groups hydrolyze to form secondary amine groups in the copolymer chain which cure the vic-epoxy groups therein. The copolymers preferably contain about one equivalent of latent amine for each equivalent of epoxy therein.

Thus, one embodiment of this invention provides copolymer containing both epoxy groups and groups of the formula I above. The copolymer is preferably a vinyl addition copolymer of monoethylenically unsaturated monomers comprising at least one of glycidyl acrylate, glycidyl methacrylate, glycidyl vinyl ether and glycidyl vinyl sulfide; at least one monomer of formula (III) above, and, optionally, one or more other monomers inert to the epoxy, oxazolidine and oxazine groups.

The proportions and amounts of the monomers may be as described above. Other comonomers may include those described above.

The polymer may be prepared by any known technique amenable to the use of substantially anhydrous conditions so that the epoxy, oxazolidine or oxazine groups do not react prematurely. Preferably the polymer is prepared by anhydrous organic solvent solution polymerisation.

A particularly preferred polymer is one containing about 16% by weight glycidyl methacrylate, about 11% by weight of 2,2-dimethyl oxazolidinyl ethyl methacrylate, about 30% methyl methacrylate and about 43% butyl methacrylate.

In all embodiments of this invention it is preferred that the oxa-component be oxazolidine. In the oxa-formulae given herein $R^1$ is preferably methyl and $R^2$ methyl, ethyl or propyl.

A further embodiment of the invention provides a method of coating and/or impregnating a substrate which comprises applying thereto a composition according to the invention, exposing the composition to moisture, in the form of added water or atmospheric moisture, before and/or upon said application, and curing the composition or allowing it to cure. The composition may be cured at ambient temperature, such as from 15 to 20°C, and at relative humidities as low as 20%. The temperature may be raised to accelerate cure if desired. Consequently the invention embraces a substrate coated and/or impregnated with a composition according to the invention in cured form.

In the following examples which are illustrative of coating and adhesive embodiments of the present invention, the parts and percentages are by weight and the temperatures are in Celsius degrees unless otherwise noted. Where the stability of a composition according to the invention is not specifically mentioned it may be assumed to be at least one month.

Example I

Preparation of a MEOXEMA copolymer and a crosslinked coating with it and a resin-forming polyepoxide

A) 2-Ethyl-3-(2-hydroxyethyl)-2-methyl-oxazolidine (MEHEOX)

A mixture of 315 g (3 mols) of diethanolamine, 432 g (6 mols) of methylethylketone, and 100 ml of cyclohexane is stirred and heated to reflux using a Dean-Stark trap to separate the water formed. The mixture is stirred and refluxed for a total of 31-1/2 hours during which 54 ml of aqueous layer, 85% water and 15% methyl ethyl ketone by NMR, is collected (85% of the theoretical amount of water of reaction). The mixture is then concentrated and the residue distilled to give 373 g (78% yield) of product (MEHEOX), b.p. 85—88°C (333—400 $N/m^2$) (2.5—3.0 mm Hg).

B) Methacrylate of MEHEOX (MEOXEMA)

A mixture of 2800 g (28 mols) of methyl methacrylate, 1114 g (7 mols) of 2-ethyl-3-(2-hydroxyethyl)-2-methyl-oxazolidine (MEHEOX), 20 g of hydroquinone and 17.5 g (0.07 mol) of dibutyltin oxide is stirred and heated while a slow stream of dry air is passed through the mixture. The vapour is fractionated using a 10-stage Oldershaw column equipped with an isothermal distillation controller set for 50% takeoff below 65°C. and 100% reflux when the temperature exceeds 65°C. After three hours, 83% of the theoretical amount of methanol has been collected and a precipitate begins to form in the reaction mixture. The mixture is cooled to room temperature and filtered. The solid is

washed with methyl methacrylate and air-dried to give 8.5 g of a tan powder which contains 42% tin by elemental analysis. Excess methyl methacrylate is stripped from the filtrate and 1326 g of a mixture of product and 2-ethyl-3-(2-hydroxyethyl)-3-methyl-oxazolidine is distilled from the flask. This crude product is inhibited with 10 g of hydroquinone and redistilled thru an 20 cm (eight-inch) Vigreux column, again using an air sparge, to give 1007 g (63% yield) of product, b.p. 107—109°C./240—267 $N/m^2$.

C) Copolymer of styrene and MEOXEMA (57.88/42.11)

To 250 g of xylene, maintained at reflux (138°C.) is added continuously (dropwise) over a period of 4 hours a solution of 289.43 g of styrene, 210.57 g of MEOXEMA and 6.67 g of a 75% solution of *t*-butyl peracetate in mineral spirits (available commercially under the trademark designation Lupersol® 70). The polymerizing solution and the feed solution of monomers and catalyst may both be sparged continuously with dry nitrogen during the 4-hour period of addition.

When the addition is completed, heating is continued for 0.5 hour. Then an additional charge of 0.67 g of Lupersol 70 is added and heating at reflux is continued for 1 hour before cooling the completed resin to ambient temperature.

D) Coating with a polyepoxide

To 10.0 g of the copolymer prepared in Part C is added 5.00 g of ethoxyethanol acetate and 4.40 g of a 50% solution of Epon® 828* dissolved in ethoxyethanol acetate. After mixing, a 127 μm wet film is coated on a phosphatized steel panel (Bonderite® 1000). After 2 weeks curing at 21°C/50% RH, the KHN is 17.6 and reverse impact greater than 10 in-lbs (25,4 cm. 445 g). Heating at 60°C for 24 hrs. increases the KHN to 19.6 and the reverse impact to more than 16,9 N. Chemical resistance of the coating is excellent both before and after heating.

*A liquid diglycidyl ether Bis-phenol A resin having a viscosity of 10,000—16,000 m Pa.s (cps). (25°C.) and an epoxide equivalent weight of 185—192.

Example II

Preparation of a 2,2-dialkyloxazolidinyl functional polyurethane and coating with polyepoxy resins

A) A solution of 44.2 g (0.1 mole N=C=O) of an isocyanate terminated polyurethane prepolymer (available commercially under the trademark designation Spenkel® P-49-60cx) and 15.9 g (0.1 mole) of 2-ethyl-3-(2-hydroxyethyl)-2-methyl-oxazolidine is prepared in a tightly stoppered bottle and held at ambient temperature for 24 hours. The viscous product is dissolved in 60.0 g of anhydrous butyl Carbitol®. This solution (II-A) contains 0.76 MEq/g of amine by titration in glacial acetic acid with perchloric acid using crystal violet indicator.

B) To 15.0 g (11.4 MEq) of Solution II-A there is added 2.0 g (11.4 MEq) of Epon 828 and after thorough mixing, a coating is prepared on a Bonderite 1000 test panel at a 127 μm wet film thickness. After curing under ambient conditions (7 days/25°C., 1 day/60°C.) the film is swelled but not dissolved by methylene chloride (MDC) and is not affected by two hours exposure to cheese cloth patches wet with 10% aqueous acetic acid and toluene. Coating solution in a stoppered bottle is fluid after nearly 3 months storage at ambient temperature.

Example III

Preparation of the tri-2[3(2-ethyl-2-methyl-oxazolidinyl)]-ethyl carbamate of 1,6-hexane diisocyanate trimer

A) Oxazolidine component

A solution of 19.9 g (0.125 mole) of 2-ethyl-3-(2-hydroxyethyl)-2-methyl-oxazolidine, 26.6 g (0.125 equivalents N=C=O) of a 75% solution of 1,6-hexamethylene-diisocyanate trimer (available under the trademark Desmodur N) in Cellosolve acetate, and 42.2 g of toluene is heated at 95°C. for 11 hours. After cooling to room temperature, the solution (III-A) is filtered and found to contain 1.44 MEq/g of amine by titration.

B) Coating with polyepoxide

To 10.0 g (1.44 MEq) of the polymer Solution III-A is added 2.45 g of Epon 828, and after mixing, a coating 127 μm wet) is prepared on a Bonderite 1000 panel. After curing 7 days/25°C., 1 day/60°C. a tack free, clear, tough film is obtained that is unaffected by exposure at ambient temperature, to patches of cheesecloth saturated with 10% acetic acid and toluene, for 2 hours.

Example IV

Dialkyloxazolidinyl diester and a coating prepared from it and a polyepoxide

A) Diester

In a 500-ml three-necked flask, fitted with a stirrer, nitrogen sparging tube and a mirrored, vacuum jacketed, sieve plate fractionation column with reflux condenser and a proportionally timed distillation take-off mechanism, a solution of 125 g of toluene, 79.6 g (0.5 mole) of 2-ethyl-3-(2-hydroxyethyl)-2-methyloxazolidine, 43.8 g (0.25 mole) of dimethyl adipate, and 0.27 g (0.005 mole) of

sodium methoxide is heated at reflux for 6 hours. During this time methanol/toluene azeotrope boiling at 65°C. is collected yielding a total distillate weighing 26.2 g corresponding to 15.8 g of methanol (99% of theory). Two successive additional charges of 0.30 g of sodium methoxide are added to the refluxing solution during this 6 hour period.

Upon cooling to room temperature the solution is filtered to remove insoluble catalyst residues. The clear filtrate (IVA) contains 4.3 MEq/g amine.

B) Coating

To 10.0 g (43.0 MEq) of the solution prepared in Part IV-A is added 7.3 g (43.0 MEq) of Epon 828. After mixing, a 127 μm wet film coating is prepared on Bonderite 1000. After curing for 7 days/25°C., 1 day/60°C. a tack free, clear, tough coating is obtained which is swelled but not dissolved by methylene chloride and which is unaffected by exposure for 2 hours to cheesecloth patches saturated with 10% aqueous acetic acid and toluene.

Example V

Polymer containing both epoxy and dialkyloxazolidinyl functionality and a coating from it.

A) Polymer

To 300 g of refluxing xylene, sparged with dry nitrogen gas, there is added over a period of 4 hours, a solution of 90.44 g of methyl methacrylate (MMA), 129.06 g of butyl methacrylate (BMA), 48.23 g of 2-(2,2-dimethyloxazolidinyl) ethyl methacrylate (DMOXEMA), 32.27 g of glycidyl methacrylate (GMA), and 8.00 g of Lupersol 70. When the addition is complete the solution is maintained at reflux for 0.5 hours, then, 0.80 g of Lupersol 70 is added and refluxing is continued for 1.0 hour, before cooling to room temperature. The solution (V-A) is straw yellow and clear. The monomer components of this polymer are in the molar ratio of 4/4/1/1//MMA/BMA/GMA/DMOXEMA.

The solution (V-A) of poligomer appears unchanged after 4.5 months storage in a stoppered bottle at ambient temperature.

B) Coating

A clear coating of (V-A) is cast as a 152 μm film on Bonderite 1000. The coating is tack-free after 15 min. at ambient temperature. After curing 18 days at ambient temperature the coating is swelled by methylene chloride; it shows light blistering and haze when exposed for 1 hour to a cheesecloth patch saturated with 10% aqueous acetic acid; it is not attacked by 10% sodium hydroxide solution, and is only slightly swollen by gasoline and methanol after 1 hour.

Example VI

A) Part A) of Example I is a process for making MEHEOX, i.e., 2-ethyl-3-(2-hydroxyethyl)-2-methyl-oxazolidine by reaction of diethanolamine with methyl ethyl ketone. Replacement of the latter ketone with acetone in molarly corresponding amount yields 3-(2-hydroxyethyl)-2,2-dimethyl-oxazolidine, herein referred to by the acronym DMHEOX, i.e., dimethyl-hydroxyethyl-oxazolidine. Replacement of the ketone with cyclopentanone or cyclohexanone yields 3-(2-hydroxyethyl)-2,2-tetramethylene- or 3-(2-hydroxyethyl)-2,2-pentamethylene-oxazolidine.

For comparison purposes, isobutyraldehyde is used in place of the ketone so that the reaction with diethanol amine produces 3-(2-hydroxyethyl)-2-isopropyl-oxazolidine (IPHEOX) in which only one of the hydrogens on the 2-carbon position of the oxazolidinyl ring is replaced with an alkyl group. Likewise, 3-(2-hydroxyethyl)-oxazolidine (HEOX) is obtained when formaldehyde is used instead of isobutylaldehyde.

B) The procedure of Part B) of Example 1 is used to prepare the acrylate (using methyl acrylate instead of methyl methacrylate) or the methacrylate of the various 3-(2-hydroxyethyl)-oxazolidines mentioned in Part A) hereof. The methacrylate of HEOX is referred to simply by the acronym, OXEMA; the methacrylate of IPHEOX is referred to as IPOXEMA; that of MEHEOX, MEOXEMA; that of DMHEOX, DMOXEMA, and so on.

C) Copolymers are prepared from the various methacrylates produced in Part B) hereof by the general procedure described in Example IC) hereinabove with styrene (S), acrylonitrile (A), methyl methacrylate (MMA), butyl methacrylate (BMA).

Table I describes the composition of the copolymers, the percentage initiator used, the amount of solvent used and the percent solids and amine titer of the product. Polymers C1—C3 are comparative copolymers in which the 2-position of the oxazolidine ring is substituted by one or two hydrogen atoms.

TABLE I
Oxazolidine copolymers

| No. | Monomers (g) | Monomer molar ratio | % Initiator[1] | Solvent (g) | Product % solids | Product amine titer[2] |
|---|---|---|---|---|---|---|
| 1 | MEOXEMA (100.0) S(91.7) | 1/2 | 5 | EEA(127.8) | 60 | 1.21 |
| 2 | MEOXEMA (100.0) S(137.5) | 1/3 | 3 | PB(158.3) | 60 | 1.09 |
| 3 | MEOXEMA (100.0) S(137.5) | 1/3 | 1 | PB(158.3) | 60 | 1.10 |
| 4 | MEOXEMA (100.0) S(229.3) | 1/5 | 3 | PB(219.5) | 60 | 0.75 |
| 5 | DMOXEMA (215.0) S(316.0) | 1/3 | 3 | XY(758.6) | 70 | 1.28 |
| C1 | OXEMA (107.6) S(181.4) | 1/3 | 3 | PB(180.8) | 60 | 0.77 |
| C2 | IPOXEMA (170.5) S(234.0) | 1/3 | 3 | PB(253.5) | 60 | 0.72 |
| 6 | MEOXEMA (100.0) S(183.4) A(23.4) | 1/4/1 | 3 | PB(204.5) | 60 | 0.82 |
| 7 | MEOXEMA (100.0) MMA(132.1) | 1/3 | 3 | PB(154.7) | 60 | 1.02 |
| 8 | MEOXEMA (86.9) BMA(163.1) | 1/3 | 2 | BE(250.0) | 50 | 0.558 |
| 9 | DMOXEMA (81.8) BMA(218.2) | 1/4 | 2 | XY(300.0) | 50 | 0.640 |
| C3 | OXEMA (194.7) BMA(426.0) | 1/3 | 3 | XY(611.0) | 50 | 0.818 |

[1]% t-butylperacetate based on total monomer weight.
[2]milliequivalents per gram
MEOXEMA=2-(2-ethyl-2-methyloxazolidinyl)ether methacrylate
DMOXEMA=2-(2,2-dimethyloxazolidinyl)ethyl methacrylate
OXEMA=2-oxazolidinyl ethyl methacrylate
IPOXEMA=2-(2-isopropyloxazolidinyl)ethyl methacrylate
S=styrene MMA=methyl methacrylate
A=acrylonitrile DMA=butyl methacrylate
EEA=2-ethoxyethyl acetate PB=Propasol B [$n\text{-}C_4H_9OCH_2CH(CH_3)OH$]
XY=xylene BE=2-butoxyethanol

D) Coating compositions are prepared by mixing a 10-gram portion of each of products 1 to 9, C1 and C2, and of the solution II-A prepared in part (A) of Example II (a polyfunctional resin-forming condensate of 2-ethyl-3-(2-hydroxyethyl)-2-methyl-oxazolidine with the isocyanate-terminated polyurethane prepolymer with an amount of 100% polyepoxide condensate (commercial product Epon® 828) such that the ratio of NH/epoxy equivalents is 1:1.

The second column of Table II gives the amount of Epon 828 added. The third column refers to the properties of 5-mil wet film cast on Bonderite 1000 test panels after 20 hours and the fourth column gives the methylene dichloride (MDC) resistance of such films at 1 to 4 days. The next seven columns give the appearance, hardness (Knoop Hardness No.—KHN), and various resistance after 3 weeks ambient curing 21.1°C (70°F)/50% relative humidity) of such films. The final column gives the stability of the coating solution when stored in the absence of moisture in closed cans or drums at 25°C.

TABLE II
Mixture of poly(oxazolidine) and polyepoxide

| No. | Epoxide (g) | Properties 20 hrs. | MDC[2] resistance days | Properties on 3 weeks ambient curing 21.1°C (70°F)/50% R.H. Appearance[1] | KHN | MDC[3] | HAc[3] | HCl[3] | Tol.[3] | MEOH[3] | Stability[1] of mixture (25°C) |
|---|---|---|---|---|---|---|---|---|---|---|---|
| 1 | 2.42 | C, H, G, TF | 4/4 | C, H, G, TF | 19.0 | 4 | 4 | 4 | 3 | 2 | C, F, 84 days |
| 2 | 2.18 | " | 4/4 | " | 18.9 | 4 | 4 | 4 | 3 | 3 | " |
| 3 | 2.20 | " | 4/4 | " | 18.4 | 4 | 4 | 4 | 3 | 3 | " |
| 4 | 1.50 | " | 4/4 | " | 17.8 | 4 | 4 | 4 | 3 | 3 | " |
| 5 | 2.56 | " | 3/2 | " | 19.6 | 4 | 4 | 4 | 3 | 3 | " |
| C1 | 1.61 | " | 3/1 | " | 16.3 | 3 | 4 | 4 | 3 | 2 | Gel, <3 days |
| C2 | 1.48 | " | 3/1 | " | 18.7 | 3 | 3 | 4 | 3 | 3 | Gel, >30, <84 days |
| 6 | 1.64 | " | 4/4 | " | 17.4 | 4 | 4 | 4 | 3 | 3 | C, F, 84 days |
| 7 | 2.04 | " | 4/2 | " | 15.6 | 4 | 1 | 1 | 3 | 3 | " |
| 8 | 1.36 | C, S, G, St | 4/4 | C, St | 6.68 | 3 | 1 | 4 | 2 | 2 | " |
| 9 | 1.28 | " | 3/2 | C, St | 2.90 | 4 | 1 | 4 | 1 | 3 | " |
| II-A | 1.52 | C, H, G, TF | T/4 | C, T | 10.7 | 4 | 1 | 4 | 1 | 3 | " |

[1]C=clear; H=hard; G=glossy; TF=tack-free; S=soft; St=slight tack; T=tacky; F=fluid
[2]Ratings in methylene dichloride (MDC)
4=swelled with no soluble fraction.
3=swelled with slight amount of solubles
2=swelled with significant solubles
1=dissolved
[3]10% aqueous HAc (acetic acid) with HCl, toluene (Tol.) and methanol (MeOH); patch tests, 2 hrs with acids, 1 hr with solvents
4=no change
3=slight softening
2=significant softening
1=delaminated or dissolved

E) Coating compositions are prepared by mixing 10-gram portions of the products listed in Table 1 Nos. 1 to 9, Cl, C2 and C3, with an amount of a 75% solution in xylene of Epon® 1001 that provides an NH/epoxy equivalent ratio of 1:1 or 1:2 as indicated in the second column of Table III. Also, a 10-gram portion of each of solution IIA and solution IIIA are mixed with enough of the polyepoxide to provide an NH/epoxy equivalent ratio of 1:1. An additional 10-g portion of III-A is mixed with enough of the polyepoxide to provide an NH/epoxy equivalent ratio of 1:2. Table III gives the properties of the test film prepared from the mixtures as in D) above and the stability of the coating mixture. The same footnotes apply as in Table II.

The polyepoxide used in Part E) and in Part B) are of the class generally defined as the glycidyl polyethers of Bis-phenol A obtained by reacting 2,2-bis-(4-hydroxyphenyl)propane with epichlorohydrin as described in U.S. Patent 2,633,458.

**TABLE III**
Mixture of poly(oxazolidine) and polyepoxide

| No. | NH/Epoxy | Epoxide (g) (75%) | Properties[1] 20 hrs. | MDC[2] resistance day | Properties on 3 weeks ambient curing 21.1°C (70°F)/50% R.H. Appearance | KHN | MDC[2] | HAc[3] | HCl[3] | Tol.[3] | MEOH[3] | Stability[1] of mixture (25°C) |
|---|---|---|---|---|---|---|---|---|---|---|---|---|
| 1 | 1/1 | 8.07 | C, H, G, TF | 4/4 | C, H, G, TF | 14.8 | 4 | 4 | 4 | 4 | 2 | C, F; 84 days |
| 2 | 1/1 | 7.27 | " | 4/4 | " | 11.8 | 4 | 4 | 4 | 4 | 3 | " |
| 2 | 1/2 | 14.54 | " | 4/4 | " | 9.27 | 4 | 4 | 4 | 4 | 2 | " |
| 3 | 1/1 | 7.33 | " | 4/4 | " | 14.4 | 4 | 4 | 4 | 4 | 3 | " |
| 4 | 1/1 | 5.00 | " | 4/4 | " | 14.4 | 4 | 4 | 4 | 4 | 2 | " |
| 5 | 1/1 | 8.53 | " | 3/2 | " | 16.3 | 4 | 4 | 4 | 4 | 3 | " |
| 5 | 1/2 | 17.16 | " | 3/2 | " | 16.5 | 4 | 4 | 4 | 4 | 3 | " |
| C1 | 1/1 | 5.36 | " | 4/1 | " | 17.7 | 3 | 4 | 4 | 4 | 3 | gel, 3 days |
| C2 | 1/1 | 4.93 | " | 3/1 | " | 21.0 | 3 | 4 | 1 | 4 | 3 | gel, >30, <84 days |
| 6 | 1/1 | 5.47 | " | 4/4 | " | 17.5 | 4 | 4 | 4 | 4 | 3 | C, F; 84 days |
| 7 | 1/1 | 6.80 | " | 4/2 | " | 13.4 | 4 | 1 | 4 | 4 | 3 | " |
| 7 | 1/2 | 13.60 | " | 3/4 | " | 10.7 | 3 | 4 | 4 | 4 | 3 | " |
| 8 | 1/1 | 3.72 | " | 3/2 | " | 9.68 | 4 | 4 | 4 | 4 | 3 | " |
| 9 | 1/1 | 4.27 | " | 3/2 | " | 7.42 | 4 | 4 | 4 | 1 | 1 | " |
| C3 | 1/1 | 5.45 | " | 1/4 | " | 15.3 | 3 | 3 | 4 | 2 | 2 | gel>30, <84 days |
| II-A | 1/1 | 2.85 | C, T | T/4 | C, S, TF | * | 4 | 1 | 4 | 1 | 2 | " |
| III-A | 1/1 | 5.40 | C, H, G, TF | 4/4 | C, H, G, TF | 4.54 | 4 | 1 | 1 | 3 | 3 | C, F; 84 days |
| III-A | 1/2 | 10.80 | " | 4/4 | " | 11.8 | 4 | 1 | 1 | 3 | 3 | " |

*Rubbery; Other footnotes are same as in Table II

F) Coating compositions are prepared with 10-gram portions of oxazolidine copolymers Nos. 1 to 9 of Table I by mixing each portion with a diglycidyl ether condensate of Bis-phenol A which has been hydrogenated to saturate the aromatic groups. The polyepoxide used therein may therefore be properly designated a glycidyl polyether of 2,2-bis-(4-hydroxycyclohexyl)propane. This saturated polyepoxide is preferred for reasons of stability against ultraviolet light. An amount of the saturated polyepoxide thereby obtained is added to each of the 9 copolymers to provide an equivalency ratio of 1:1 of NH/epoxy in the mixture. A 50% solution, in xylene or Propasol B, of a polyepoxide of the type available under the trademark Eponex® 151.1 is used. A comparison mixture of a 10-gram portion of a commercially available condensation product of a long-chain fatty acid and an aliphatic polyamine, identified as V in Table IV, that has been used as a polyepoxy resin curing agent is provided.

The mixtures are coated, stored, and tested in the same way as the mixtures and films thereof were tested in D) and E) hereinabove. The same footnotes as in Table II apply in the following Table IV.

The present invention is the result of the discovery that (poly)functional oxazolidines in which both hydrogen atom of the 2-position carbon in the ring is substituted by alkyl groups or an alkylene group serve as latent polyepoxide curing agents and resin-forming polyepoxides can be mixed with the latent curing agent and stored in the absence of moisture for months without noticeable change or reaction but that on formation of films of the composition and exposure thereof to moisture, even ambient air having a relative humidity of at least 20%, and preferably at least 50% provides reasonably rapid curing to form hard, high performance coatings. In contrast, mixtures of a resin-forming polyepoxide with (poly)functional oxazolidines in which neither or only one of the hydrogen atoms on the 2-position carbon is replaced with alkyl or alkylene groups lack stability on storage; even in the absence of moisture such as oxazolidine undergoes reaction directly with the polyepoxide as a tertiary amine that causes gelation. Apparently the 2,2-dialkyl or 2,2-alkylene oxazolinyl rings of Formula I are in effect sterically hindered and must be hydrolyzed by moisture to produce an hydroxyalkyl group to cure the polyepoxide.

TABLE IV
Mixture of poly(oxazolidine) and polyepoxide

| No. | Epoxide (g) (50%) | Properties[1] 20 hrs. | MDC[2] resistance days | Properties on 3 weeks ambient curing 21.1°C (70°F)/50% R.H. Appearance[1] | KHN | MDC[2] | HAc[3] | HCl[3] | Tol.[3] | MEOH[3] | Stability[1] of mixture (25°C) |
|---|---|---|---|---|---|---|---|---|---|---|---|
| 1 | 2.84 | C, H, G, TF | 4/4 | C, H, G | 15.7 | 4 | 1 | 2 | 3 | 3 | C, F; 84 days |
| 2 | 2.56 | " | 4/4 | " | 15.6 | 4 | 3 | 4 | 3 | 3 | " |
| 3 | 2.59 | " | 4/4 | " | 16.7 | 4 | 4 | 4 | 3 | 3 | " |
| 4 | 1.76 | " | 4/4 | " | 13.9 | 4 | 4 | 4 | 1 | 3 | " |
| 5 | 6.01 | " | 4/4 | " | 10.9 | 4 | 1 | 4 | 1 | 2 | " |
| 6 | 1.93 | " | 4/4 | " | 17.3 | 4 | 4 | 4 | 3 | 3 | " |
| 7 | 2.40 | " | 4/4 | " | 14.4 | 4 | 1 | 1 | 3 | 3 | " |
| 8 | 2.62 | C, G, T | 1/2 | C, S, G | 2.40 | 4 | 1 | 2 | 1 | 3 | " |
| 9 | 3.00 | " | 1/2 | " | 1.80 | 4 | 1 | 4 | 1 | 3 | " |
| V | 1.44 | " | 4/4 | H, T, SS* | 7.19 | 4 | 1 | 1 | 4 | 4 | gel <8 hrs. |

*SS=surface spue

Example VII

Water-reduced coatings

A) To 689 g of a solution containing 66.6% polymer solids of a copolymer of styrene and MEOXEMA (3:1 molar ratio) in xylene, having an amine titer of 1.20 ME/g of solution, is added 165.4 g of EPON 828 resin. The resulting solution is heated to 100°C and xylene is removed by distillation under reduced pressure until the resinous distillation residue contains about 93—4% polymer solids. The resinous distillation residue is then diluted with 111.8 g of methyl n-propyl ketone to obtain a mixture containing 80% polymer solids.

To 50 g of this diluted mixture there is added 1 g of phenoxyethanol and 1 g of Capcure® 65 emulsifier followed by the further addition of 16.7 g of water, dropwise and while stirring rapidly, thereby obtaining a water-reduced coating emulsion.

This emulsion is then cast as a 127 $\mu$m wet film coating on Bonderite 1000 immediately after preparation and again after the emulsion has been allowed to stand 5 hours at ambient conditions. Both of the resulting coatings are white when freshly cast but become clear after standing 30 minutes at ambient conditions. After curing 7 days at ambient conditions, the coatings are swelled, but not dissolved, by methylene chloride, which property indicates that crosslinking has occurred.

B) To 189 g of a solution of a copolymer of isobutyl methacrylate and MEOXEMA (3:1 molar ratio) in xylene, having an amine titer of 1.16 ME/g of solution, is added 51.5 g of Eponex® 151.1 resin (an aliphatic epoxide resin). The resulting solution is heated to about 100°C and xylene is removed by distillation under reduced pressure. The resinous distillation residue is then dissolved in 28.2 g of methyl *n*-propyl ketone. To 50 g of this solution there is added 2.0 g of phenoxyethanol and 1.5 g of Capcure® 65 emulsifier followed by the further addition 31.0 g of water, dropwise and while stirring rapidly, thereby obtaining a water-reduced coating emulsion.

This emulsion is then cast as a 178 $\mu$m wet film coating on Bonderite® 1000 panels. After drying for 30 minutes at ambient temperature, the coating is clear (transparent). After curing for both 30 minutes and for 24 hours at ambient temperature the coating is swelled, but not dissolved, by methylene chloride, which property indicates that crosslinking has occurred.

Preliminary outdoor durability data indicates that the coating of part B) of this example possesses more prolonged outdoor durability than do similar coatings derived from photochemically reactive aromatic components such as styrene and bis-phenol A.

Example VIII

Preparation of adhesive composition

A) Amine copolymer

To 150.0 g of xylene, heated at 105°C with stirring and maintained under a nitrogen atmosphere, is added dropwise over a period of 4 hours a solution of 323.0 g of isodecyl methacrylate, 27.05 g of MEXOEMA and 10.50 g of *t*-butyl peroctoate. When the addition is complete, an additional charge of 1.05 g of *t*-butyl peroctoate is added to the stirred polymerization reaction mixture and the temperature is maintained at 105°C for 30 minutes before cooling the product.

The product is a clear, light yellow solution, contains an amine titer of 0.21 ME/g and has a $\overline{M}w$ of 27,9000 and a $\overline{M}n$ of 7360 (determined by gel permeation chromatography).

B) Adhesive composition

To 10.0 g of the solution obtained in part A) above is added 0.42 g of Epon® 828. The resulting solution is coated as a 51 $\mu$m wet film on Bonderite® 1000 panels. After drying overnight at ambient temperature, a very tacky and adhesive coating is obtained. The coated film is suitable for use as a pressure sensitive adhesive and adheres to nylon, propylene and polyethylene terephthalate films. The coating is then stored in a stoppered vial at room temperature. After 30 days of storage, the appearance of the solution is unchanged from its initial appearance.

## Claims

1. A hydrocurable stable composition containing at least one component comprising (a) at least two oxazolidinyl or oxazinyl groups of the formula:

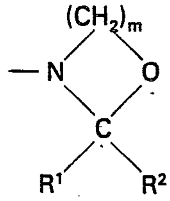

wherein m is 2 or 3, preferably 2, and (b) at least two epoxy groups, the composition being anhydrous, characterized in that in the above formula $R^1$ and $R^2$ are alkyl groups containing 4 to 5 carbon atoms, the oxazolidine or oxazine component should be free of other amine or amine generating groups.

2. A composition as claimed in Claim 1, characterised in that (a) and (b) are separately in at least two different components of the material.

3. A composition as claimed in Claim 1, characterised in that both (a) and (b) are together in at least one component of the material.

4. A composition as claimed in any of claims 1 to 2, characterised in that (b) is in a resin-forming polyepoxide containing at least two vic-epoxy groups.

5. A composition as claimed in Claim 4, characterised in that the polyepoxide comprises at least one glycidyl polyether of 2,2-bis(4-hydroxyphenyl)propane or of 2,2-bis(4-hydroxycyclohexyl)propane.

6. A composition as claimed in Claim 4, characterised in that the polyepoxide comprises at least one vinyl addition polymer of monoethylenically unsaturated monomers comprising at least one glycidyl acrylate, glycidyl methacrylate, glycidyl vinyl ether or glycidyl vinyl sulfide.

7. A composition as claimed in any of Claims 1 to 2 or 4 to 6, characterized in that (a) is in:

(i) at least one condensation product of at least one hydroxylalkyl oxazolidine or oxazine of the formula:

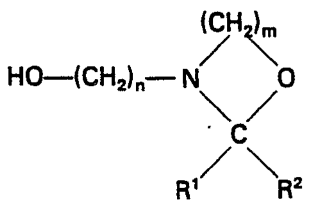

wherein $R^1$, $R^2$ and m are as defined in Claim 1 and n is 2 or 3, preferably 2, with at least one polycarboxylic acid or at least one polyisocyanate; or

(ii) at least one transesterification product of such hydroxyalkyl oxazolidine or oxazine with at least one polyester of at least one polycarboxylic acid.

8. A composition as claimed in any of Claims 1 to 2 or 4 to 6, characterised in that (a) is in at least one vinyl addition copolymer of monoethylenically unsaturated monomers comprising at least one monomer of the formula:

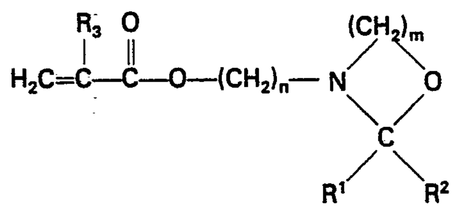

used in amounts of between 5 and 70% by weight, wherein $R^1$, $R^2$ and m are as defined in Claim 1, n as defined in Claim 8 and $R^3$ is H or $CH_3$.

9. A composition as claimed in Claim 8, characterised in that the monomers also comprise at least one of: styrene, vinyl toluene, acrylonitrile and one or more $C_1$—$C_{18}$ alkyl esters of acrylic and/or methacrylic acid.

10. A composition as claimed in any of Claims 1 or 2, characterised in that (a) and (b) are in at least one vinyl addition copolymer of monoethylenically unsaturated monomers comprising at least one monomer of the formula:

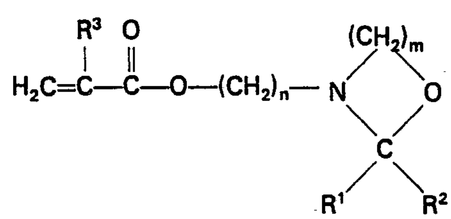

wherein $R^1$, $R^2$ and m are as defined in Claim 1, n as defined in Claim 8 and $R^3$ is H or $CH_3$, and at least one glycidyl acrylate, glycidyl methacrylate, glycidyl vinyl ether or glycidyl vinyl sulfide.

11. A composition as claimed in Claim 10, characterised in that the monomers also comprise at least one of: styrene, vinyl toluene, acrylonitrile and one or more $C_1$—$C_{18}$ alkyl esters of acrylic and/or methacrylic acid.

12. A composition as claimed in any preceding claim, characterised in that $R^1$ is methyl and $R^2$ is methyl, ethyl or propyl.

13. A composition as claimed in any preceding claim, characterised in that it contains at least one equivalent of epoxy group for each equivalent of potential amine in the oxazolidine or oxazine.

14. A vinyl addition copolymer of monoethylenically unsaturated monomers as claimed in Claim 3, characterised in that the monomers comprise:

(i) at least one glycidyl acrylate, glycidyl methacrylate, glycidyl vinyl ether or glycidyl vinyl sulfide;
(ii) at least one monomer of the formula:

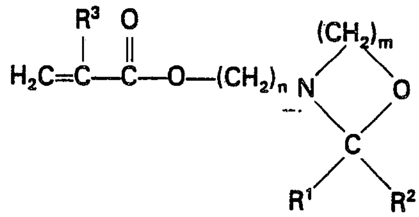

wherein $R^1$ and $R^2$ are alkyl groups or are joined together to form an alkylene group containing 4 or 5 carbon atoms, $R^3$ is H or $CH_3$ and m and n are 2 or 3, preferably 2, and, optionally,
(iii) one or more other monomers inert to the epoxy groups in (i), and the oxazolidinyl or oxazinyl groups in (ii).

15. A copolymer as claimed in Claim 14, characterised in that it contains at least one equivalent of epoxy group for each equivalent of potential amine group in the oxazolidinyl or oxazinyl groups.

16. A copolymer as claimed in Claim 14 or 15, characterised in that it is prepared by anhydrous organic solvent solution polymerisation.

17. A copolymer as claimed in any of claims 14 to 16, characterised in that $R^1$ is methyl and $R^2$ is methyl, ethyl or propyl.

18. A copolymer as claimed in any of Claims 14 to 17, characterised in that it contains at least 5% by weight of monomer (ii).

19. A copolymer as claimed in any of claims 14 to 18, characterised in that it also contains units of at least one of: styrene, vinyl toluene, acrylonitrile and one or more $C_1$—$C_{18}$ alkyl esters of acrylic and/or methacrylic acid.

20. A copolymer as claimed in Claim 19, characterised in that it comprises about 16% by weight of glycidyl methacrylate, about 11% by weight of 2,2-dimethyl oxazolidinyl ethyl methacrylate, about 30% by weight of methyl methacrylate and about 43% of butyl methacrylate.

21. A method of coating and/or impregnating a substrate, characterised in that it comprises applying a composition according to any of claims 1 to 13 or 14 to 20 to the substrate, exposing the composition to moisture, in the form of added water and/or atmospheric moisture, before, after and/or during the coating/impregnating step and curing the composition or allowing it to cure.

22. A method as claimed in Claim 21, characterised in that the composition is allowed to cure at ambient temperature.

23. A substrate bearing a coating and/or impregnation of a composition according to any of claims 1 to 13 in cured form.

**Patentansprüche**

1. Hydrohärtbare stabile Masse, enthaltend wenigstens eine Komponente aus (a) wenigstens zwei Oxazolidinyl- oder Oxazinyl-Gruppen der Formel:

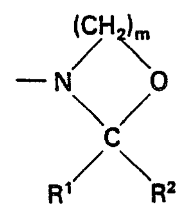

worin m für 2 oder 3, vorzugsweise 2, steht und (b) wenigstens zwei Epoxygruppen, wobei die Masse wasserfrei ist, dadurch gekennzeichnet, daß in der obigen Formel $R^1$ und $R^2$ für Alkylgruppen stehen, die 4 bis 5 Kohlenstoffatome enthalten, wobei die Oxazolidin- oder Oxazinkomponente frei von anderen Aminen oder aminerzeugenden Gruppen sein sollte.

2. Masse nach Anspruch 1, dadurch gekennzeichnet, daß (a) und (b) getrennt in wenigstens zwei verschiedenen Komponenten des Materials vorliegen.

3. Masse nach Anspruch 1, dadurch gekennzeichnet, daß sowohol (a) und (b) zusammen in wenigstens einer Komponente des Materials vorliegen.

4. Masse nach einem der Ansprüche 1 bis 2, dadurch gekennzeichnet, daß (b) ein harzbildendes Polyepoxid ist, das wenigstens zwei Vic-Epoxygruppen enthält.

5. Masse nach Anspruch 4, dadurch gekennzeichnet, daß das Polyepoxid aus wenigstens einem Glycidylpolyäther von 2,2-bis-(4-hydroxyphenyl)propan oder von 2,2-bis-(4-hydroxycyclohexyl)-propan besteht.

6. Masse nach Anspruch 4, dadurch gekennzeichnet, daß das Polyepoxid aus wenigstens einem Vinyl Additionspolymeren von monoethylenisch ungesättigten Monomeren aus wenigstens einem Glycidylacrylat, Glycidylmethacrylat, Glycidylvinyläther oder Glycidylvinylsulfid besteht.

7. Masse nach einem der Ansprüche 1 bis 2 oder 4 bis 6, dadurch gekennzeichnet, daß (a) in

1. wenigstens einem Kondensationsprodukt wenigstens eines Hydroxylalkyloxazolidins oder -oxazins der Formel:

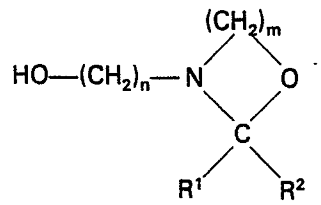

worin $R^1$, $R^2$ und m die in Anspruch 1 angegebenen Bedeutungen besitzen und n 2 oder 3 und vorzugsweise 2 ist, mit wenigstens einer Polycarbonsäure oder wenigstens einem Polyisocyanat oder

2. wenigstens einem Umesterungsprodukt eines darartigen Hydroxyalkyloxazolidins oder -oxazins mit wenigstens einem Polyester wenigstens einer Polycarbonsäure vorliegen.

8. Masse nach einem der Ansprüche 1 bis 2 oder 4 bis 6, dadurch gekennzeichnet, daß (a) in wenigstens einem Vinyladditionscopolymeren monoethylenisch ungesättigter Monomerer aus wenigstens einem Monomeren der Formel:

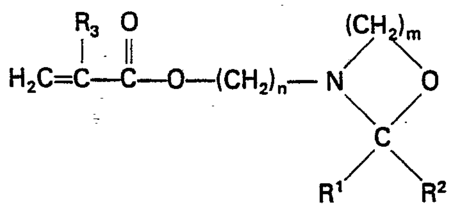

eingesetzt in Mengen zwischen 5 und 70 Gew.-%, wobei $R^1$, $R^2$ und m die in Anspruch 1 angegebenen Bedeutungen besitzen, n die in Anspruch 8 angegebene Bedeutung hat und $R^3$ für H oder $CH_3$ steht, vorliegt.

9. Masse nach Anspruch 8, dadurch gekennzeichnet, daß die Monomeren auch wenigstens eine der folgenden Verbindungen aufweisen: Styrol, Vinyltoluol, Acrylonitril sowie eine oder mehrere $C_1$—$C_{18}$-Alkylester von Acrylsäure und/oder Methacrylsäure.

10. Masse nach einem der Ansprüche 1 oder 2, dadurch gekennzeichnet, daß (a) und (b) in wenigstens einem Vinyladditionscopolymeren monoethylenisch ungesättigter Monomere aus wenigstens einem Monomeren der Formel:

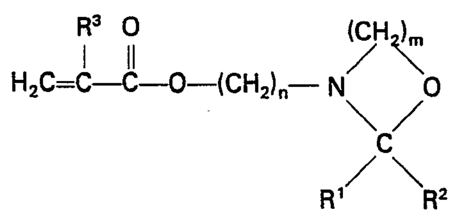

worin $R^1$, $R^2$ und m die in Anspruch 1 angegebenen Bedeutungen besitzen, n die in Anspruch 8 angegebene Bedeutung hat und $R^3$ für H oder CH steht, und wenigstens einem Glycidylacrylat, Glycidylmethacrylat, Glycidylvinyläther oder Glycidylvinylsulfid vorliegen.

11. Masse nach Anspruch 10, dadurch gekennzeichnet, daß die Monomeren auch wenigstens eine der folgenden Verbindungen aufweisen: Styrol, Vinyltoluol, Acrylnitril sowie ein oder mehrere $C_1$—$C_{18}$-Alkylester von Alcrylsäure und/oder Methacrylsäure.

12. Masse nach einem der vorhergehenden Ansprüche, dadurch gekennzeichnet, daß $R^1$ für Methyl steht und $R^2$ Methyl, Ethyl oder Propyl ist.

13. Masse nach einem der vorhergehenden Ansprüche, dadurch gekennzeichnet, daß sie

wenigstens ein Äquivalent Epoxygruppe pro Äquivalent des potentiellen Amins in dem Oxazolidin oder Oxazin enthält.

14. Vinyladditionscopolymeres monoethylenisch ungesättigter Monomerer gemäß Anspruch 3, dadurch gekennzeichnet, daß die Monomeren aus folgenden Bestandteilen bestehen:

1. wenigstens einem Glycidylacrylat, Glycidylmethacrylat, Glycidylvinyläther oder Glycidylvinylsulfid,
2. wenigstens einem Monomeren der Formel:

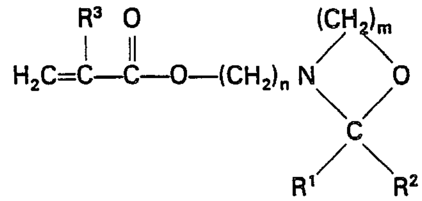

worin $R^1$ und $R^2$ für Alkylgruppen stehen oder miteinander unter Bildung einer Alkylengruppe, die 4 oder 5 Kohlenstoffatome enthält, verbunden sind, $R^3$ H oder $CH_3$ bedeutet und m und n 2 oder 3, vorzugsweise 2, sind und gegebenenfalls

3. einem oder mehreren gegenüber den Epoxygruppen in (1), sowie die in Oxazolidinyl- oder Oxazinylgruppen in (2) inerten Monomeren.

15. Copolymeres nach Anspruch 14, dadurch gekennzeichnet, daß es wenigstens ein Äquivalent Epoxygruppe pro Äquivalent der potentiellen Amingruppe in den Oxazolidinyloder Oxazinylgruppen enthält.

16. Copolymers nach Anspruch 14 oder 15, dadurch gekennzeichnet, daß es hergestellt wird durch Lösungspolymerisation in einem wasserfreien organischen Lösungsmittel.

17. Copolymeres nach einem der Ansprüche 14 bis 16, dadurch gekennzeichnet, daß $R^1$ für Methyl steht und $R^2$ Methyl, Ethyl oder Propyl ist.

18. Copolymeres nach einem der Ansprüche 14 bis 17, dadurch gekennzeichnet, daß es wenigstens 5 Gew.-% des Monomeren (2) enthält.

19. Polymeres nach einem der Ansprüche 14 bis 18, dadurch gekennzeichnet, daß es außerdem Einheiten wenigstens einer der folgenden Substanzen enthält: Styrol, Vinyltoluol, Acrylnitril sowie eines oder mehrerer $C_1$—$C_8$-Alkylester von Acrylsäure und/oder Methacrylsäure.

20. Copolymeres nach Anspruch 19, dadurch gekennzeichnet, daß es aus ungefähr 16 Gew.-% Glycidylmethacrylat, ungefähr 11 Gew.-% 2,2-Dimethyloxazolidinylethylmethacrylat, ungefähr 30 Gew.-% Methylmethacrylat ungefähr 43% Butylmethacrylat besteht.

21. Verfahren zum Beschichten und/oder Imprägnieren eines Substrats, dadurch gekennzeichnet, daß eine Masse gemäß einem der Ansprüche 1 bis 13 oder 14 bis 20 auf das Substrat aufgebracht wird, die Masse der Einwirkung von Feuchtigkeit in Form von zugesetztem Wasser und/oder atmosphärischer Feuchtigkeit vor, nach und/oder während des Beschichtens oder der Imprägnierungsstufe ausgesetzt wird und die Masse gehärtet oder härten gelassen wird.

22. Verfahren nach Anspruch 21, dadurch gekennzeichnet, daß die Masse bei Umgebungstemperatur härten gelassen wird.

23. Substrat mit einem Überzug und/oder einer Imprägnierung aus einer Masse gemäß einem der Ansprüche 1 bis 13 in gehärteter Form.

**Revendications**

1. Composition stable hydrodurcissable contenant au moins un composant comprenant (a) au moins deux groupes oxazolidinyle ou oxazinyle de la formule:

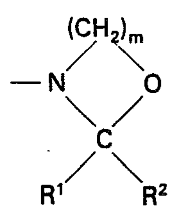

dans laquelle m est 2 ou 3, de préférence 2, et (b) au moins deux groupes époxy, la composition étant anhydre, caractérisée en ce que dans la formule ci-dessus $R^1$ et $R^2$ sont des groupes alkyle contenant 4 à 5 atomes de carbone, le composant oxazolidine ou oxazine doit être exempt d'autres groupes amine ou générateurs d'amine.

2. Composition comme revendiquée dans la revendication 1, caractérisée en ce que (a) et (b) sont séparément dans au moins deux différents composants du matériau.

3. Composition comme revendiquée dans la revendication 1, caractérisée en ce que à la fois (a) et (b) sont ensemble dans au moins un composant du matériau.

4. Composition comme revendiquée dans les revendications 1 et 2, caractérisée en ce que (b) est un polyépoxyde formateur de résine contenant au moins deux groupes vic-epoxy.

5. Composition comme revendiquée dans la revendication 4, caractérisée en ce que le polyépoxyde comprend au moins un polyéther glycidylique du 2,2-bis(4-hydroxyphényl)propane ou du 2,2-bis(4-hydroxycyclohexyl)propane.

6. Composition comme revendiquée dans la revendication 4, caractérisée en ce que le polyépoxyde comprend au moins un polymère d'addition vinylique de monomères insaturés monoéthyléniquement comprenant au moins un acrylate de glycidyle, méthacrylate de glycidyle, éther vinylique de glycidyle ou sulfure vinylique de glycidyle.

7. Composition comme revendiquée dans l'une quelconque des revendications 1 et 2 ou 4 à 6, caractérisée en ce que (a) est dans:

(i) au moins un produit de condensation d'au moins une oxazolidine ou oxazine hydroxylalkylique de formule:

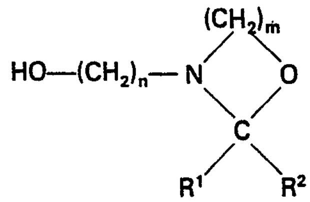

dans laquelle $R^1$, $R^2$ et m sont comme définis dans la revendication 1 et n est 2 ou 3, de préférence 2, avec au moins un acide polycarboxylique ou au moins un polyisocyanate; ou

(ii) au moins un produit de transestérification de telle oxazolidine ou oxazine hydroxyalkylique avec au moins un polyester d'au moins un acide polycarboxylique.

8. Composition comme revendiquée dans l'une quelconque des revendications 1 et 2 ou 4 à 6, caractérisée en ce que (a) est dans au moins un copolymère d'addition vinylique de monomères insaturés monoéthyléniquement comprenant au moins un monomère de formule:

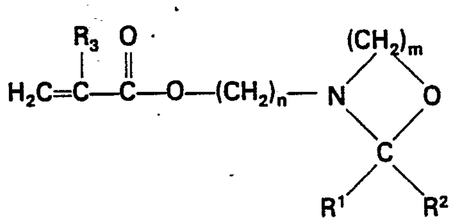

utilisé dans des quantités comprises entre 5 et 70% en poids, dans laquelle $R^1$, $R^2$ et m sont comme définis dans la revendication 1, n comme défini dans la revendication 8 et $R^3$ est H ou $CH_3$.

9. Composition comme revendiquée dans la revendication 8, caractérisée en ce que les monomères comprennent aussi un: styrène, toluène de vinyle, acrylonitrile et un ou plusieurs esters d'alkyle en $C_1$—$C_{18}$ de l'acide acrylique et/ou méthacrylique.

10. Composition comme revendiquée dans l'une des revendications 1 ou 2, caractérisée en ce que (a) et (b) sont dans au moins un copolymère d'addition vinylique de monomères insaturés monoéthyléniquement comprenant au moins un monomère de formule:

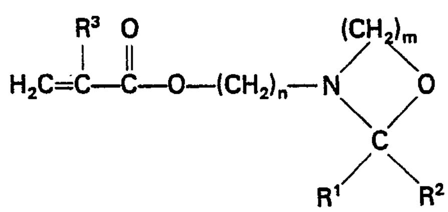

dans laquelle $R^1$, $R^2$ et m sont comme définis dans la revendication 1, n comme défini dans la revendication 8 et $R^3$ est H ou $CH_3$, et au moins un acrylate de glycidyle, méthacrylate de glycidyle, éther vinylique de glycidyle ou sulfure vinylique de glycidyle.

11. Composition comme revendiquée dans la revendication 10, caractérisée en ce que les monomères comprennent aussi au moins un des: styrène, toluène de vinyle, acrylonitrile et un ou plusieurs esters d'alkyle en $C_1$—$C_{18}$ de l'acide acrylique et/ou méthacrylique.

12. Composition comme revendiquée dans l'une quelconque des revendications précédentes, caractérisée en ce que $R^1$ est méthyle et $R^2$ est méthyle, éthyle ou propyle.

13. Composition comme revendiquée dans l'une quelconque des revendications précédentes, caractérisée en ce qu'elle contient au moins un équivalent de groupe époxy pour chacune équivalent d'amine potentielle dans l'oxazolidine ou l'oxazine.

14. Copolymère d'addition vinylique de monomères insaturés monoéthyléniquement comme revendiqué dans la revendication 3, caractérisé en ce que les monomères comprennent:

(i) au moins un acrylate de glycidyle, méthacrylate de glycidyle, éther vinylique de glycidyle ou sulfure vinylique de glycidyle;
(ii) au moins un monomère de formule:

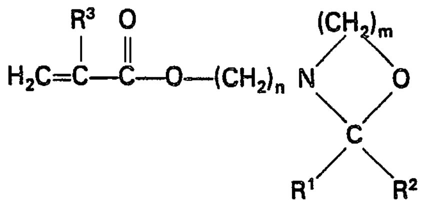

dans laquelle $R^1$ et $R^2$ sont des groupes alkyle ou sont reliés ensemble pour former un groupe alkylène contenant 4 ou 5 atomes de carbone, $R^3$ est H ou $CH_3$ et m et n sont 2 ou 3, de préférence 2, et, facultativement,
(iii) un ou plusieurs autres monomères inertes vis à vis des groupes époxy dans (i), et des groupes oxazolidinyle ou oxazinyle dans (ii).

15. Copolymère comme revendiqué dans la revendication 14, caractérisé en ce qu'il contient au moins un équivalent de groupe époxy pour chaque équivalent de groupe amine potentiel dans les groupes oxazolidinyle ou oxazinyle.

16. Copolymère comme revendiqué dans la revendication 14 ou 15, caractérisé en ce qu'il est préparé par polymérisation en solution de solvant organique anhydre.

17. Copolymère comme revendiqué dans les revendications 14 à 16, caractérisé en ce que $R^1$ est méthyle, éthyle ou propyle.

18. Copolymère comme revendiqué dans l'une quelconque des revendications 14 à 17, caractérisé en ce qu'il contient au moins 5% en poids de monomère (ii).

19. Copolymère comme revendiqué dans l'une quelconque des revendications 14 à 18, caractérisé en ce qu'il contient aussi des motifs d'au moins un des: styrène, toluène de vinyle, acrylonitrile et ou plusieurs esters d'alkyle de l'acide acrylique et/ou méthyacrylique.

20. Copolymère comme revendiqué dans la revendication 13, caractérisé en ce qu'il comprend environ 16% en poids de méthacrylate de glycidyle, environ 11% en poids de méthacrylate de 2,2-diméthyl oxazolidinyle éthyle, environ 30% en poids de méthacrylate de méthyle et environ 43% de méthacrylate de butyle.

21. Procédé de revêtement et/ou d'imprégnation d'un substrat, caractérisé en ce qu'il comprend l'application d'une composition selon l'une quelconque des revendication 1 à 13 ou 14 à 20 au substrat, l'exposition de la composition à l'humidité sous la forme d'eau ajoutée et/ou d'humidité atmosphérique, avant, après et/ou pendant l'étape de revêtement/impregnation et le durcissement de la composition ou la possibilité de le laisser durcir.

22. Procédé comme revendiqué dans la revendication 21, caractérisé en ce qu'on laisse durcir la composition à la température ambiante.

23. Substrat recevant un revêtement et/ou une imprégnation d'une composition selon l'une quelconque des revendications 1 à 13 à l'état durci.